# EUROPEAN PATENT SPECIFICATION

(11) **EP 2 379 338 B1**
(45) Date of publication and mention of the grant of the patent: **20.11.2013**
(21) Application number: 10702346.7
(22) Date of filing: 19.01.2010
(51) Int. Cl.: B42D 3/00

(54) **BINDING ELEMENT FOR MANUFACTURING A BINDING FILE AND METHOD WHICH MAKES USE OF SUCH A BINDING ELEMENT FOR MANUFACTURING THE BINDING FILE**
BINDUNGSELEMENT ZUR HERSTELLUNG EINER EINBINDEMAPPE UND VERFAHREN ZUR VERWENDUNG EINES DERARTIGEN BINDUNGSELEMENTS ZUR HERSTELLUNG DER EINBINDEMAPPE
ELÉMENT DE RELIURE POUR LA FABRICATION D'UN CLASSEUR DE RELIURE ET PROCÉDÉ QUI UTILISE UN TEL ÉLÉMENT DE RELIURE POUR LA FABRICATION DU CLASSEUR DE RELIURE

(30) Priority: 21.01.2009 BE 200900036
(43) Date of publication of application: 26.10.2011
(73) Proprietor: Unibind Limited, 136 Nicosia (CY)
(72) Inventor: PELEMAN, Guido, B-2018 Antwerpen (BE)
(74) Representative: Donné, Eddy
(86) International application number: PCT/IB2010/000090
(87) International publication number: WO 2010/084399

(56) References cited:
- EP-A- 1 669 212
- FR-A- 2 784 053
- GB-A- 1 372 078
- US-A- 3 215 450
- US-A- 3 964 770
- US-A1- 2002 050 710
- US-B1- 6 250 867

## Description

The present invention concerns a binding element for manufacturing a binding file and a method which makes use of such a binding element for manufacturing the binding file. Relevant prior art in this technical field is disclosed in documents US3964770, upon which the preamble of claims 1 and 15 are based, and FR2784053.

In particular, the invention aims to produce a binding file formed of a U-shaped back and two end leaves for binding a bundle of leaves such as for example leaves with photos in order to make a photo album.

Binding elements provided with an outer covering are already known, whereby the outer covering, before the bundle is being bound, has already been provided with a print to thus render the bound bundle more aesthetical.

Such outer coverings can for example be made of laminated, colour-printed paper.

It goes without saying that the outer covering may not only be decorative, but that it can also be made as a protective layer protecting the bundle against all sorts of external influences.

In order to produce a bundle by means of these known binding elements, use is made of a method which is carried out partly in a mechanical manner and partly manually.

In the known methods, an outer covering is first taken as a basis which is provided in a mould and on which is put a layer of liquid glue.

Secondly, one or several strips of cardboard are provided on the liquid glue.

Usually, three strips of cardboard are provided, the middlemost of which is usually narrower and functions as a binding strip for the bundle to be put in place.

By providing three separate strips, the binding element can be easily folded in a U-shape without being hindered by the stiffness of the cardboard.

The outer covering is folded back and fixed at the edges.

Next, the side of the bundle to be bound is roughened and this rough side is coated with a liquid glue, after which the bundle can be provided in the binding element and can be pressed against the middlemost cardboard strip so as to form a bound bundle.

A disadvantage is that this method is complex and time-consuming.

The use of liquid glue complicates the application of the method considerably, since the thickness and density of the glue have a great impact on the quality of the bound bundle.

For, if too little glue is provided, the strips will not adhere well on the outer covering and will come off after a while.

Another disadvantage of liquid glue is that it evaporates quickly, which implies that the glue container should always be sealed in case of repeated applications.

Another disadvantage is that the use of liquid glue requires a thorough cleaning of the machine when it is started and stopped.

Anyway, it is clear that the known method requires some skill and experience to obtain a qualitatively well bound bundle.

Alternative methods are already known whereby the cardboard strips are fixed to the outer covering by means of a heat-sensitive hotmelt glue.

A disadvantage, however, is that during the heating-up the cardboard strips may shift in relation to one another as the glue is liquidized while being heated.

Also, here as well, some dexterity and experience is required to obtain a rigid, well bound bundle.

Another additional disadvantage of the application of the known methods is that much dust is produced while roughening the edge of the bundle, making dust extraction necessary.

The present invention aims to remedy one or several of the above-mentioned and/or other disadvantages by providing a binding element for manufacturing a binding file with a U-shaped back and two end leaves, whereby the binding element is a semi-finished product on the basis of which the binding file can be made, and whereby this binding element is a flat binding element consisting of a support which is formed of a central flat strip out of which the back will be formed later and of two flat plates on either side of the above-mentioned strip, which support is provided with a covering provided over or around said support and characterized in that the covering (5) is provided with a layer of hotmelt glue on the outside extending on the outer surface on one side of the thus formed binding element and on the edges of the opposite side of said binding element for fixing a printed outer covering.

An advantage is that the binding elements are flat and thus can be easily stored.

Another advantage is that when manufacturing the binding file, the central strip is transformed into a U-shaped back, which is advantageous in that the leaves are firmly bound in the binding file and cannot come off when the bundle is repeatedly opened.

Another advantage is that the binding element can be manufactured in an inexpensive manner.

Thanks to the presence of a hotmelt glue, an outer covering can be easily provided without the use of a liquid glue.

As the hotmelt glue has been provided beforehand, it can be precisely dosed, so that when applying an outer covering the required amount of glue will be present without any excess or shortage of glue.

Moreover, the glue can be uniformly provided over the entire surface in this way, without any local zones being created with an excess or shortage of glue.

As the components of the support are entirely or partly surrounded by the covering, these components always stay in the right position in relation to one another, also when the element is heated so as to liquidize the hotmelt glue for fixing the outer covering.

The present invention also concerns a method for manufacturing the above-mentioned binding file with a U-shaped back and two end leaves, whereby this method takes the above-mentioned binding element as a basis, and whereby in order to make the binding file, a printed outer covering with a downward facing print is provided on a surface and the flat binding element is subsequently placed on the printed outer covering with the side covered with the hotmelt glue facing down, and whereby this outer covering is folded back at the edges over the edges of the binding element and these folded-back edges are locally heated and cooled down again to temporarily fix the printed outer covering, after which the whole is heated, pressed and cooled down again so as to make the hotmelt glue melt on the side of the printed outer covering and to subsequently transform the central strip so as to form the U-shaped back.

An advantage is that this method is very user-friendly since no dexterity or expert skill is required of the user, and consequently the method does not require any qualified and trained personnel.

A supply of flat, semi-finished binding elements is hereby taken as a basis, for example, a supply of either or not pre-printed outer coverings, optionally a supply of inner coverings which are already provided with a layer of hotmelt glue, whereby in order to form the binding file as desired, a combination of the above-mentioned supplies is made to compose a file as desired by the end user.

Another advantage is that the use of a heat-sensitive hotmelt glue does not require any cleaning.

According to a simple application, the heating and pressing can be done by means of heated pressure rollers in between which the element according to the invention is guided and whereby, in order to speed up the process, the heated pressure rollers may possibly be followed by cooled rollers so as to make the heated, melted glue cure faster.

In order to better explain the characteristics of the invention, the following preferred embodiment of an element according to the invention is described by way of example only without being limitative in any way, with reference to the accompanying drawings, in which:
figure 1 schematically represents a practical embodiment of a binding element according to the invention;
figure 2 represents a section according to line II-II in figure 1 to a larger scale;
figures 3 to 7 schematically represent a few steps of the method according to the invention whereby a binding element according to figure 1 is used;
figure 8 schematically represents the binding file;
figure 9 represents an alternative embodiment of the binding element according to figure 2.

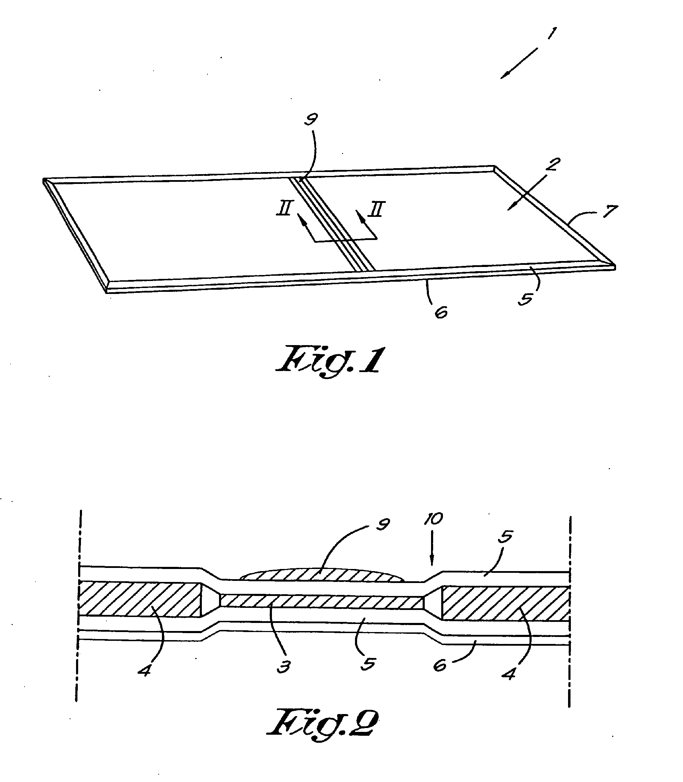

Figures 1 and 2 schematically represent a binding element 1 according to the invention, which binding element 1 is a semi-finished product which is mainly composed of a flat support 2 formed of a central flat strip 3 and two flat plates 4 on either side of the above-mentioned strip 3.

The central strip 3 is thereby designed to form the back of the binding file later on, and the two plates 4 are designed to form the end leaves.

According to the invention, this support 2 is provided with a covering 5 provided over or around said support 2, and the covering 5 is provided with a layer of hotmelt glue 6 on the outside, extending on the outer surface of one side of the binding element 1 and on the edges 7 of the opposite side of the binding element 1.

The melting temperature of the hotmelt glue 6 is preferably not too high, such that a little heating is sufficient to liquidize the glue.

In practice, a hotmelt glue 6 is used whose melting temperature is lower than the temperature at which the toner powders and inks that are traditionally used become damaged, since the binding element 1 may be provided with a pre-printed outer covering 8.

The covering 5 can be made of paper or cardboard, but preference is given to a covering 5 made of paper, preferably paper with a density of 90 g/m².

Naturally, the invention is not limited thereto and also other materials such as linen can be used as a covering 5.

Naturally, the covering 5 can also be made of different components and for each side of the support 2 may be selected another material, for example.

In a practical embodiment of the invention, the binding element 1 is provided with a strip of glue 9 for fixing a bundle of leaves in the binding file later on.

In a practical embodiment of the invention, the strip of glue 9 can be provided as a strip of heat-sensitive hotmelt glue, and the central strip 3 is made of metal, steel or another heat-conducting material, such that when binding the bundle of leaves the supplied heat is conducted well.

In an alternative embodiment of the invention which is not represented in the figures, the strip of glue 9 may be provided as a self-adhesive strip, which may be further either or not protected by a thin layer of cover foil, which protective layer can be easily removed by the user before binding the bundle.

The covering 5 preferably forms a hinge 10 at the connection of the strip 3 to the plate 4 between these elements 3,4.

Although, in the given embodiment of figure 2, the plates 4 and the central strip 3 are connected by a covering 5, on the top as well as on the bottom side, it is not excluded according to the invention that the covering 5 is provided on only one side and that only a folded-back part of said covering 5 is folded back over the edges of the binding element 1 and is fixed at the edges on the other side of the binding element.

The strip of glue 9 can be provided on the covering 5 at the central strip 3 or it can be provided directly on the central strip 3 without any covering layer 5.

The method for manufacturing a binding file by means of a binding element 1 according to the invention is very simple and as follows.

In a first step of the method according to the invention, a printed outer covering 8 is provided with the print facing down on a face or plate which is not represented.

The user can select this outer covering 8 as desired, and it is clear that numerous materials, such as for example paper or cardboard, are suitable. Said outer covering 8 may be pre-printed. Naturally, also other materials such as leather, linen, plastic or the like can be used as an outer covering 8.

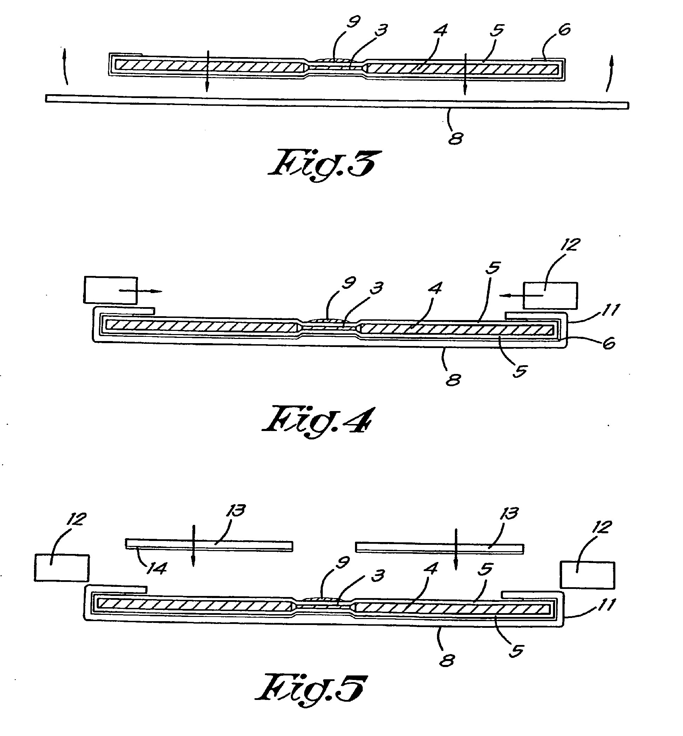

As is schematically represented in figure 3, the semi-finished binding element 1 is subsequently provided on the latter with the side coated with the hotmelt glue 6 facing down, such that, after the bundle has been bound, the desired printed outer covering 8 is visible on the outside of the bound bundle.

To this end, the dimensions of the outer covering 8 are selected larger than the dimensions of the binding element 1, such that the edges 11 of the outer covering 8 can be folded back round the edges 7 of the binding element 1 and such that these folded-back edges 11 entirely cover the hotmelt glue 6 on the edges of the top side of the binding element 1, as is shown in figure 4.

In a subsequent step, also shown in figure 4, these folded-back edges 11 are locally heated so as to temporarily fix them by means of heating elements 12 which can be moved and which press the edges 11 of the outer covering 8 against the binding element 1 during the heating.

According to a preferred variant of the method, an inner covering 13 can subsequently be provided on the surface of the binding element 1, on the opposite side of the outer covering 8, as is shown in figure 5.

This inner covering 13 is preferably made of paper having a density of about '90 g/m², but of course the invention is not restricted to the above-mentioned material selection.

In the given embodiment, the inner covering 13 is formed of two half inner coverings on either side of the central part of the support 2.

Although in the embodiment of the figures, the inner covering 13 is made as two halve inner coverings, it is also possible of course to provide the inner covering in the form of a single continuous inner covering which in this case also extends over the central strip 3.

This inner covering 13 is provided with a layer of hotmelt glue 14 on one side with which the inner covering 13 can be fixed to the binding element 1.

In this phase of the method, said inner covering 13 is provisionally fixed to the binding element 1 by locally heating the inner covering 13 at some points or along the edges of the binding element 1.

Use is hereby preferably made of an inner covering 13 whose dimensions are selected such that the inner covering 13 extends at least over a distance, over the folded-back edges 11 of the outer covering 8.

In the following step of the method, the formed whole, either or not provided with inner coverings 13, is heated, pressed and cooled down again, such that the hotmelt glue 6, 14 between the binding element 1 and the outer and inner covering 8, 13 is liquidized so that, after these coverings 8,13 have cooled down again, they are firmly fixed to the binding element 1.

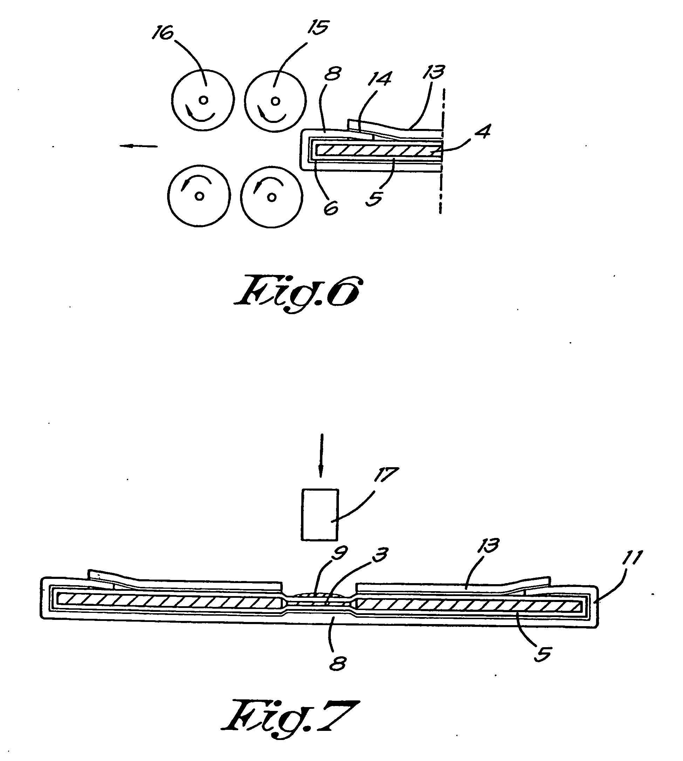

For the heating and pressing, as shown in figure 6, use is preferably made of rollers, a number of which are hot rollers 15, followed by a number of cold rollers 16, in between which the formed whole can be guided in the direction of the arrow P.

The hot rollers 15 can thereby be provided with a screen, not represented in the figures, and the whole is preferably placed such between the rollers that said screen is situated at the central strip 3 level, such that the strip of glue 9 at the central strip 3 will not melt due to the contact with the hot rollers 15.

An example of such a screen may consist in that the hot rollers 15 are interrupted at the strip of glue 9 or in that some additional protection is provided over the strip of glue 9 before the whole is guided between the rollers 15.

According to another variant of the method, the heating and pressing of the whole can take place by making use of heated plates in between which the whole is guided or by means of a heating element which is moved with a certain pressure over the binding element 1.

According to an alternative method, it is possible to guide the whole through hot rollers only and to subsequently cool it without making use of cold rollers 16 or other cooling techniques.

Naturally, the method can also be applied by means of other heating, pressing and cooling techniques than the above-mentioned techniques.

Finally, the back of the central strip 3 can be pressed in the required U-shape by means of a press-on element 17, as shown in figure 7, after which the obtained binding element 1 is suitable to function as a binding file 18, namely as a U-shaped back together with two end leaves.

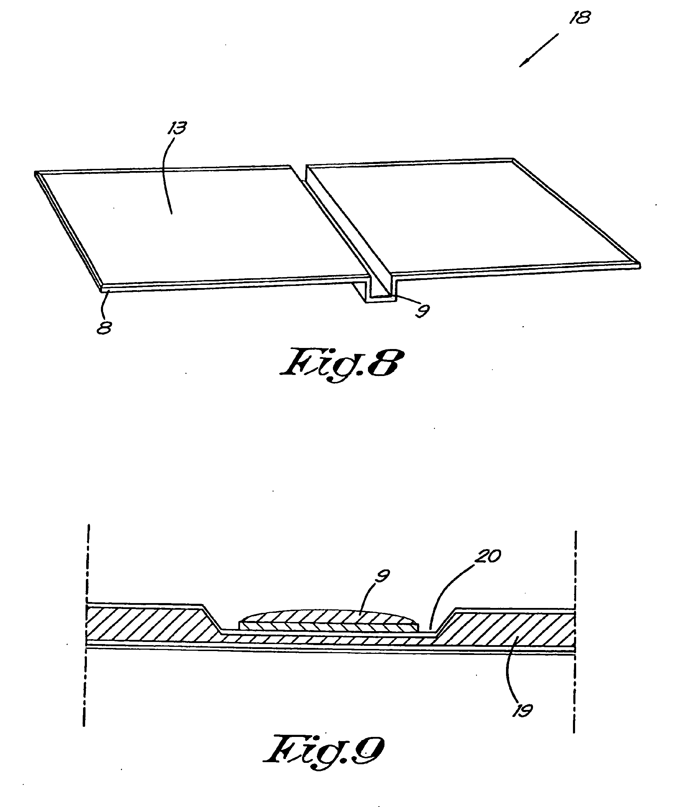

Such a binding file 18, as shown in figure 8, can be used to bind a bundle of leaves in a known manner, by applying this bundle with a free edge in the back and by heating this back with appropriate equipment in order to liquidize the strip of glue 9, after which it is cooled down again so as to make the glue solidify.

In an alternative embodiment of the invention, as shown in figure 9, the support 2 can be made as a continuous flat plate 19, for example made of cardboard, provided with a recess 20 in the plate 19 concerned along the central strip 3.

Of course it is not excluded to provide several recesses 20 in the plate 19.

In another embodiment which is not represented, instead of the central strip of glue 9, a self-adhesive strip of glue can be applied which is provided on the inner covering 13 and which, after the inner covering 13 has been provided on the binding element 1, is situated on the top side of the binding element 1 and which extends along two parallel strips next to the central strip 3 or which extends over the entire surface of the top side of the inner covering 13.

In this case, the bundle of leaves to be bound is for example stapled first at one edge, and this edge is provided in the back of the binding file 18, after which the bundle is bound by folding up the end leaves such that the strips of self-adhesive glue make contact with the outer leaves of the bundle.

It is clear that a method according to the invention is within anyone's ability and does not require any highly skilled craftsmen.

Moreover, the method makes it possible to obtain binding files in a very flexible manner and with a very professional look, whereby a supply of binding elements 1 is taken on the spot which can be coated with a printed outer covering 8 as desired, selected from a supply of outer coverings, and optionally an inner covering 13, also to be selected from a supply of inner coverings which are already provided with a layer of hotmelt 14.

The figures only represent the invention in a schematical manner, and the relations between the different elements, especially the thicknesses, are drawn out of proportion, only in order to be able to illustrate the invention better by means of the figures.

The present invention is by no means restricted to the variants described by way of example and represented in the accompanying drawings; on the contrary, a binding element for manufacturing a binding file and a method applied thereby can be made in all sorts of variants while still remaining within the scope of the following claims.

## Claims

1. Binding element (1) for manufacturing a binding file with a U-shaped back and two end leaves, **characterised in that** this binding element (1) is a semi-finished product on the basis of which the binding file can be made, and **in that** this binding element (1) is a flat binding element (1) consisting of a support (2) which is formed of a central flat strip (3) out of which the back will be formed later, and of two flat plates (4) on either side of the above-mentioned strip (3), which support (2) is provided with a covering (5) provided over or around said support (2) **characterized in that** the covering (5) is provided with a layer of hotmelt glue (6) on the outside extending on the outer surface on one side of the thus formed binding element (1) and on the edges (7) of the opposite side of said binding element (1) for fixing a printed outer covering (8).

2. Binding element (1) according to claim 1, **characterised in that** the covering (5) is made of paper.

3. Binding element (1) according to claim 1 or 2, **characterised in that** the binding element (1) is provided with a strip of glue (9) for fixing a bundle of leaves in the binding file later.

4. Binding element (1) according to claim 3, **characterised in that** the above-mentioned strip of glue (9) is formed of a hotmelt glue which is provided at the central strip (3) and **in that** the central strip (3) is made of metal.

5. Binding element (1) according to claim 3 or 4, **characterised in that** the strip of glue (9) consists of a self-adhesive strip.

6. Binding element (1) according to claim 1, **characterised in that** the support (2) is formed of a continuous flat plate (19), provided with one or several recesses (20) in the plate (19) concerned along the central strip (3).

7. Binding element (1) according to any one of the preceding claims, **characterised in that** the binding element (1) is provided with a printed outer covering (8) whose dimensions are larger than the dimensions of the binding element (1) and whose edges (11) are folded down around the edges (7) of the binding element (1), and which is fixed to the latter by means of the above-mentioned hotmelt glue (6).

8. Binding element (1) according to claim 7, **characterised in that** the dimensions of the outer covering (8) are such that the folded-back edges (11) of the outer covering entirely cover the hotmelt glue (6) along the edges (7) of the binding element (1).

9. Binding element (1) according to any one of the preceding claims, **characterised in that** the binding element (1) is provided with an inner covering (13) provided with a hotmelt glue (14) on one side with which the inner covering (13) is applied on the binding element (1) and whose dimensions are such that this inner covering (13) extends over at least a distance, over the folded-back edges (11) of the outer covering (8).

10. Binding element (1) according to claim 9, **characterised in that** the inner covering (13) is provided with a self-adhesive strip of glue on the opposite side of the hotmelt glue (14) for fixing the bundle of leaves to be bound.

11. Binding element (1) according to claim 9 or 10, **characterised in that** the inner covering (13) is formed of two halve coverings on either side of the central part of the support (2).

12. Binding element (1) according to any one of claims 9 or 10, **characterised in that** the inner covering (13) is made as a single continuous covering.

13. Binding element (1) according to claim 10, **characterised in that** the inner covering (13) is provided with a self-adhesive strip on the opposite side of the hotmelt glue (14) extending over practically the entire surface of the above-mentioned side or over one or several narrow strips on either side of the central strip.

14. Binding file, **characterised in that** it is formed of a binding element (1) according to any one of claims 1 to 13, whereby the central strip (3) has been transformed into a U-shaped back.

15. Method for manufacturing a binding file with a U-shaped back and two end leaves, **characterised in that** this method takes a binding element (1) according to any one of claims 1 to 5 as a basis, and **in that** in order to manufacture the binding file, a printed outer covering (8) with a downward facing print is provided on a face and the flat binding element (1) is subsequently placed on the printed outer covering (8) with the side covered with the hotmelt glue (6) facing down, and **in that** this outer covering (8) is folded back at the edges (11) over the edges (7) of the binding element (1) and these folded-back edges (11) are locally heated and cooled down again to temporarily fix the printed outer covering (8), after which the whole is heated, pressed and cooled down again so as to make the hotmelt (6) glue melt on the side of the printed outer covering (8) and to subsequently transform the central strip (3) so as to form the U-shaped back.

16. Method according to claim 15, **characterised in that**, prior to the step of heating and pressing the whole, an inner covering (13) is provided on the surface of the binding element (1) along the other side of the outer covering (8), which inner covering (13) is provided with a hotmelt glue (14) which is fixed to the support (2) in a few places by locally heating it, overlapping with the folded-back edges (11) of the outer covering (8), after which the inner covering (13) is permanently fixed together with the outer covering (8) during the above-mentioned step of heating and pressing the whole.

17. Method according to claim 15 or 16, **characterised in that**, in order to press and heat the whole, use is made of rollers (15, 16) in between which or under which the whole is guided.

18. Method according to claim 15 or 16, **characterised in that** in order to press and heat the whole, use is made of heated plates in between which the whole is guided.

19. Method according to claim 18, **characterised in that** during the heating and pressing, the central strip (3) is protected from being heated.

20. Method according to any one of claims 15 to 19, **characterised in that** a supply of flat binding elements (1) is taken as a basis, a supply of either or not pre-printed outer coverings (8), optionally a supply of inner coverings (13) which are already provided with a layer of hotmelt glue (14), whereby, in order to form the binding file as desired, a combination of the above-mentioned supplies is made to compose a binding file as desired by the end user.

## Patentansprüche

1. Einbindeelement (1) zur Herstellung einer Einbindemappe mit einem U-förmigen Rücken und zwei Deckblättern, **dadurch gekennzeichnet, dass** dieses Einbindeelement (1) ein Halbfertigprodukt ist, aus dem die Einbindemappe hergestellt werden kann, und dass dieses Einbindeelement (1) ein flaches Einbindeelement (1) ist, bestehend aus einem Träger (2), der durch einen zentralen flachen Streifen (3), woraus später der Rücken gebildet werden wird, und durch zwei flache Platten (4) zu beiden Seiten des vorgenannten Streifens (3) gebildet wird, welcher Träger (2) mit einer Abdeckung (5) versehen ist, die über oder um diesen Träger (2) angebracht ist, **dadurch gekennzeichnet, dass** die Abdeckung (5) an der Außenseite mit einer Schicht Schmelzkleber (6) versehen ist, die sich an der Außenseite an einer Seite des somit geformten Einbindeelements (1) und an den Rändern (7) der entgegengesetzten Seite dieses Einbindeelements (1) erstreckt, zwecks Befestigung einer bedruckten äußeren Abdeckung (8).

2. Einbindeelement (1) nach Anspruch 1, **dadurch gekennzeichnet, dass** die Abdeckung (5) aus Papier besteht.

3. Einbindeelement (1) nach Anspruch 1 oder 2, **dadurch gekennzeichnet, dass** das Einbindeelement (1) mit einem Leimstreifen (9) zum späteren Befestigen eines Bündels von Blättern in der Einbindemappe versehen ist.

4. Einbindeelement (1) nach Anspruch 3, **dadurch gekennzeichnet, dass** der vorgenannte Leimstreifen (9) durch einen Schmelzkleber gebildet wird, der an dem zentralen Streifen (3) angebracht ist, und dadurch, dass der zentrale Streifen (3) aus Metall hergestellt ist.

5. Einbindeelement (1) nach Anspruch 3 oder 4, **dadurch gekennzeichnet, dass** der Leimstreifen (9) aus einem selbstklebenden Streifen besteht.

6. Einbindeelement (1) nach Anspruch 1, **dadurch gekennzeichnet, dass** der Träger (2) durch eine durchlaufende flache Platte (19) gebildet wird, die entlang dem zentralen Streifen (3) mit einer oder mehreren Ausnehmungen (20) in der betreffenden Platte (19) versehen ist.

7. Einbindeelement (1) nach einem der vorgenannten Ansprüche, **dadurch gekennzeichnet, dass** das Einbindeelement (1) mit einer bedruckten äußeren Abdeckung (8) versehen ist, deren Abmessungen größer sind als die Abmessungen des Einbindeelements (1) und deren Ränder (11) um die Ränder (7) des Einbindeelements (1) herumgefaltet sind, und die mittels des vorgenannten Schmelzklebers (6) an letzterem befestigt ist.

8. Einbindeelement (1) nach Anspruch 7, **dadurch gekennzeichnet, dass** die Abmessungen der äußeren Abdeckung (8) derart sind, dass die umgefalteten Ränder (11) der äußeren Abdeckung den Schmelzkleber (6) entlang den Rändern (7) des Einbindeelements (1) vollständig bedecken.

9. Einbindeelement (1) nach einem der vorgenannten Ansprüche, **dadurch gekennzeichnet, dass** das Einbindeelement (1) mit einer inneren Abdeckung (13) versehen ist, die an einer Seite mit einem Schmelzkleber (14) versehen ist, womit die innere Abdeckung (13) an dem Einbindeelement (1) angebracht ist, und deren Abmessungen derart sind, dass diese innere Abdeckung (13) sich mindestens über einen Abstand über die umgefalteten Ränder (11) der äußeren Abdeckung (8) erstreckt.

10. Einbindeelement (1) nach Anspruch 9, **dadurch gekennzeichnet, dass** die innere Abdeckung (13) an der dem Schmelzkleber (14) entgegengesetzten Seite mit einem selbstklebenden Leimstreifen zum Befestigen des einzubindenden Bündels von Blättern versehen ist.

11. Einbindeelement (1) nach Anspruch 9 oder 10, **dadurch gekennzeichnet, dass** die innere Abdeckung (13) durch zwei halbe Abdeckungen zu beiden Seiten des zentralen Teils des Trägers (2) gebildet wird.

12. Einbindeelement (1) nach einem der Ansprüche 9 oder 10, **dadurch gekennzeichnet, dass** die innere Abdeckung (13) als eine einzige durchlaufende Abdeckung ausgeführt ist.

13. Einbindeelement (1) nach Anspruch 10, **dadurch gekennzeichnet, dass** die innere Abdeckung (13) an der dem Schmelzkleber (14) entgegengesetzten Seite mit einem selbstklebenden Streifen versehen ist, der sich praktisch über die gesamte Oberfläche der vorgenannten Seite oder über einen oder mehrere schmale Streifen zu beiden Seiten des zentralen Streifens erstreckt.

14. Einbindemappe, **dadurch gekennzeichnet, dass** sie durch ein Einbindeelement (1) gemäß einem der Ansprüche 1 bis 13 gebildet wird, wobei der zentrale Streifen (3) zu einem U-förmigen Rücken umgeformt worden ist.

15. Verfahren zur Herstellung einer Einbindemappe mit einem U-förmigen Rücken und zwei Deckblättern, **dadurch gekennzeichnet, dass** dieses Verfahren von einem Einbindeelement (1) gemäß einem der Ansprüche 1 bis 5 ausgeht, und dass, zur Herstellung der Einbindemappe, eine bedruckte äußere Abdeckung (8) mit einem nach unten gerichteten Aufdruck auf einer Fläche angebracht wird und das flache Einbindeelement (1) danach auf der bedruckten äußeren Abdeckung (8) platziert wird, mit der mit dem Schmelzkleber (6) bedeckten Seite nach unten gerichtet, und dass diese äußere Abdeckung (8) an den Rändern (11) über die Ränder (7) des Einbindeelements (1) herumgefaltet wird und diese herumgefalteten Ränder (11) örtlich erhitzt und wieder abgekühlt werden, um die bedruckte äußere Abdeckung (8) vorläufig zu befestigen, wonach das Ganze erhitzt, angedrückt und wieder abgekühlt wird, um den Schmelzkleber (6) an der Seite der bedruckten äußeren Abdeckung (8) schmelzen zu lassen, und danach der zentrale Streifen (3) verformt wird, um den U-förmigen Rücken zu bilden.

16. Verfahren nach Anspruch 15, **dadurch gekennzeichnet, dass** vor dem Schritt des Erhitzens und Andrückens des Ganzen eine innere Abdeckung (13) auf der Oberfläche des Einbindeelements (1) entlang der anderen Seite der äußeren Abdeckung (8) angebracht wird, welche innere Abdeckung (13) mit einem Schmelzkleber (14) versehen ist, der durch örtliches Erhitzen an einigen Stellen an dem Träger (2) befestigt wird, überlappend mit den umgefalteten Rändern (11) der äußeren Abdeckung (8), wonach die innere Abdeckung (13) zusammen mit der äußeren Abdeckung (8) während des vorgenannten Schritts des Erhitzens und Andrückens des Ganzen dauerhaft befestigt wird.

17. Verfahren nach Anspruch 15 oder 16, **dadurch gekennzeichnet, dass** zum Andrücken und Erhitzen des Ganzen von Walzen (15, 16) Gebrauch gemacht wird, zwischen oder unter die das Ganze geführt wird.

18. Verfahren nach Anspruch 15 oder 16, **dadurch gekennzeichnet, dass** zum Andrücken und Erhitzen des Ganzen von erhitzten Platten Gebrauch gemacht wird, zwischen die das Ganze geführt wird.

19. Verfahren nach Anspruch 18, **dadurch gekennzeichnet, dass** während des Erhitzens und Andrückens der zentrale Streifen (3) vor Erhitzung geschützt wird.

20. Verfahren nach einem der Ansprüche 15 bis 19, **dadurch gekennzeichnet, dass** von einem Vorrat flacher Einbindeelemente (1) ausgegangen wird, einem Vorrat entweder vorbedruckter oder nicht vorbedruckter äußerer Abdeckungen (8), optional einem Vorrat innerer Abdeckungen (13), die bereits mit einer Schicht Schmelzkleber (14) versehen sind, wobei, zur Bildung der Einbindemappe nach Wunsch, eine Kombination der vorgenannten Vorräte vorgenommen wird, um eine Einbindemappe auf Wunsch des Endverbrauchers zusammenzustellen.

## Revendications

1. Élément de reliure (1) pour la fabrication d'une reliure comportant un dos en forme de U et deux gardes, **caractérisé en ce que** cet élément de reliure (1) est un produit semi-fini sur base duquel on peut réaliser la reliure, et **en ce que** cet élément de reliure (1) est un élément de reliure plat (1) constitué par un support (2) qui prend la forme d'une bande plate centrale (3) à partir de laquelle le dos sera réalisé ultérieurement, et par deux plaques plates (4) de chaque côté de la bande susmentionnée (3), ledit support (2) étant muni d'une couverture (5) prévue par dessus ou autour dudit support (2), **caractérisé en ce que** la couverture (5) est munie d'une couche de colle thermofusible (6) sur le côté extérieur s'étendant sur la surface externe d'un côté de l'élément de reliure ainsi obtenu (1) et sur les bords (7) du côté opposé dudit élément de reliure (1) pour la fixation d'une couverture externe imprimée (8).

2. Élément de reliure (1) selon la revendication 1, **caractérisé en ce que** la couverture (5) est réalisée en papier.

3. Élément de reliure (1) selon la revendication 1 ou 2, **caractérisé en ce que** l'élément de reliure (1) est muni d'une bande de colle (9) pour fixer un paquet de feuilles dans la reliure ultérieurement.

4. Élément de reliure (1) selon la revendication 3, **caractérisé en ce que** la bande de colle susmentionnée (9) est constituée d'une colle thermofusible qui est prévue à l'endroit occupé par la bande centrale (3) et **en ce que** la bande centrale (3) est réalisée en métal.

5. Élément de reliure (1) selon la revendication 3 ou 4, **caractérisé en ce que** la bande de colle (9) est constituée d'une bande autoadhésive.

6. Élément de reliure (1) selon la revendication 1, **caractérisé en ce que** le support (2) est constitué d'une plaque plate continue (19) munie d'un ou de plusieurs évidements (20) dans la plaque concernée (19) le long de la bande centrale (3).

7. Élément de reliure (1) selon l'une quelconque des revendications précédentes, **caractérisé en ce que** l'élément de reliure (1) est muni d'une couverture externe imprimée (8) dont les dimensions sont supérieures aux dimensions de l'élément de reliure (1) et dont les bords (11) sont repliés vers le bas autour des bords (7) de l'élément de reliure (1), et qui est fixée au dernier cité au moyen de la colle thermofusible susmentionnée (6).

8. Élément de reliure (1) selon la revendication 7, **caractérisé en ce que** les dimensions de la couverture externe (8) sont telles que les bords repliés (11) de la couverture externe recouvrent entièrement la colle thermofusible (6) le long des bords (7) de l'élément de reliure (1).

9. Élément de reliure (1) selon l'une quelconque des revendications précédentes, **caractérisé en ce que** l'élément de reliure (1) est muni d'une couverture interne (13) munie d'une colle thermofusible (14) sur le côté avec lequel on applique la couverture interne (13) sur l'élément de reliure (1), et dont les dimensions sont telles que cette couverture interne (13) s'étend sur au moins une certaine distance, par dessus les bords repliés (11) de la couverture externe (8).

10. Élément de reliure (1) selon la revendication 9, **caractérisé en ce que** la couverture interne (13) est munie d'une bande autoadhésive de colle sur le côté opposé à celui muni de la colle thermofusible (14) pour fixer le paquet de feuilles à relier.

11. Élément de reliure (1) selon la revendication 9 ou 10, **caractérisé en ce que** la couverture interne (13) est constituée par deux moitiés de couverture de chaque côté de la partie centrale du support (2).

12. Élément de reliure (1) selon l'une quelconque des revendications 9 ou 10, **caractérisé en ce que** la couverture interne (13) est constituée d'une unique couverture continue.

13. Élément de reliure (1) selon la revendication 10, **caractérisé en ce que** la couverture interne (13) est munie d'une bande autoadhésive sur le côté opposé à celui muni de la colle thermofusible (14), s'étendant pratiquement sur toute la surface du côté susmentionné ou sur une ou plusieurs bandes étroites de chaque côté de la bande centrale.

14. Reliure, **caractérisée en ce qu'**elle est constituée d'un élément de reliure (1) selon l'une quelconque des revendications 1 à 13, la bande centrale (3) ayant été transformée en un dos en forme de U.

15. Procédé pour fabriquer une reliure comportant un dos en forme de U et deux gardes, **caractérisé en ce que** ce procédé prend pour base un élément de reliure (1) selon l'une quelconque des revendications 1 à 5, et **en ce que**, pour fabriquer la reliure, on prévoit sur une face une couverture externe imprimée (8) présentant une impression orientée vers le bas, et on place par la suite l'élément de reliure plat (1) sur la couverture externe imprimée (8) en orientant vers le bas le côté recouvert de la colle thermofusible (6), et **en ce qu'**on replie cette couverture externe (8) aux bords (11) par-dessus les bords (7) de l'élément de reliure (1) et on soumet localement ces bords repliés (11) à un chauffage, puis à un refroidissement afin de fixer temporairement la couverture externe imprimée (8) ; après quoi, on chauffe l'ensemble, on le comprime et on le refroidit à nouveau afin de faire fondre la colle thermofusible (6) sur le côté de la couverture externe imprimée (8) et afin de transformer ultérieurement la bande centrale (3) de façon à obtenir le dos en forme de U.

16. Procédé selon la revendication 15, **caractérisé en ce que**, avant l'étape de chauffage et de compression de l'ensemble, on prévoit une couverture interne (13) sur la surface de l'élément de reliure (1) le long de l'autre côté de la couverture externe (8), ladite couverture interne (13) étant munie d'une colle thermofusible (14) qui est fixée au support (2) à certains endroits en la chauffant localement, par chevauchement avec les bords repliés (11) de la couverture externe (8) ; après quoi, on fixe à demeure la couverture interne (13) conjointement avec la couverture externe (8) au cours de l'étape susmentionnée de chauffage et de compression de l'ensemble.

17. Procédé selon la revendication 15 ou 16, **caractérisé en ce que**, pour pouvoir compresser et chauffer l'ensemble, il est fait usage de rouleaux (15, 16) entre lesquels ou en dessous desquels on guide l'ensemble.

18. Procédé selon la revendication 15 ou 16, **caractérisé en ce que**, pour pouvoir compresser et chauffer l'ensemble, il est fait usage de plaques chauffées entre lesquelles on guide l'ensemble.

19. Procédé selon la revendication 18, **caractérisé en ce que**, au cours du chauffage et de la compression, on protège la bande centrale (3) à l'encontre de la chaleur.

20. Procédé selon l'une quelconque des revendications 15 à 19, **caractérisé en ce qu'**on prend comme base un jeu d'éléments de reliure plats (1), un jeu de couvertures externes (8) préimprimées ou non, le cas échéant, un jeu de couvertures internes (13) qui sont déjà munies d'une couche de colle thermofusible (14), par lequel, afin de réaliser la reliure comme on le souhaite, on réalise une combinaison des jeux susmentionnés pour composer une reliure telle qu'elle est souhaitée par l'utilisateur final.
